# EUROPEAN PATENT SPECIFICATION

(11) **EP 3 546 243 B1**
(45) Date of publication and mention of the grant of the patent: **11.08.2021**
(21) Application number: 17874416.5
(22) Date of filing: 20.11.2017
(51) Int. Cl.: B60C 5/14, B60C 9/14

(54) **PNEUMATIC TIRE**
LUFTREIFEN
PNEUMATIQUE

(30) Priority: 22.11.2016 JP 2016226852
(43) Date of publication of application: 02.10.2019
(73) Proprietor: The Yokohama Rubber Co., Ltd., Minato-ku Tokyo 105-8685 (JP)
(72) Inventor: MIYOSHI, Masaaki, Hiratsuka-shi Kanagawa 254-8601 (JP)
(74) Representative: Dilg, Haeusler, Schindelmann Patentanwaltsgesellschaft mbH
(86) International application number: PCT/JP2017/041649
(87) International publication number: WO 2018/097097

(56) References cited:
- EP-A1- 3 421 261
- WO-A1-2005/007423
- JP-A- H0 550 807
- JP-A- H04 176 705
- JP-A- 2009 279 974
- JP-A- 2010 264 792
- JP-A- 2014 031 056
- JP-A- 2014 061 723
- JP-A- 2015 174 594
- US-A- 5 280 817

## Description

### Technical Field

The present invention relates to a pneumatic tire provided with a partial tie rubber layer limitedly disposed between a portion between a carcass layer and an innerliner layer, and particularly relates to a pneumatic tire that achieves further reduction in tire weight while maintaining air permeation preventing performance and steering stability in a well-balanced manner.

### Background Art

In a pneumatic tire, a tie rubber layer is disposed between a carcass layer and an innerliner layer in order to prevent carcass cords from biting into the innerliner layer when an unvulcanized tire is inflated at the time of manufacturing the tire. In recent years, in order to reduce tire weight and rolling resistance, with regard to such tie rubber layer, it has been proposed to employ a partial tie rubber layer that is selectively disposed in right and left shoulder regions instead of all the region between the carcass layer and the innerliner layer (for example, see Patent Documents 1 and 2).

Indeed, with such a partial tie rubber layer, a usage amount of the tie rubber layer can be reduced, and tire weight and rolling resistance can be reduced as compared to a related-art tie rubber layer (full tie rubber layer) disposed in all the region between the carcass layer and the innerliner layer. However, such a partial tie rubber layer has a pair of end portions (an end portion on a tire equator side and an end portion on an outer side in a tire lateral direction) provided in each shoulder region. Thus, the number of end portions, which may become starting points of peeling between the tire components or uncrimped portions at the time of manufacturing the tire, is increased. This may affect manufacturability of the tire.

Meanwhile, when attempting to reduce the usage amount of the tie rubber layer by narrowing the width of the related-art full tie rubber layer, it is difficult to maintain air permeation preventing performance and steering stability at a high level while achieving sufficient tire weight reduction effect thereby achieving such performance in a balanced manner. Thus, improvement on a structure and arrangement of the partial tie rubber layer is further demanded.

### Citation List

### Patent Literature

Patent Document 1: JP 5239507 B
Patent Document 2: JP 5723086 B

Another prior art tire comprising a partial tie-rubber layer is known from JP 2015174594 A.

### Summary of Invention

### Technical Problem

An object of the present invention is to provide a pneumatic tire provided with a partial tie rubber layer limitedly disposed between a portion between a carcass layer and an innerliner layer, and particularly relates to a pneumatic tire that achieves further reduction in tire weight while maintaining air permeation preventing performance and steering stability in a well-balanced manner.

### Solution to Problem

In order to achieve the above-mentioned object, a pneumatic tire according to claim 1 is provided.

### Advantageous Effects of Invention

As compared to the related-art pneumatic tire having a full tie rubber layer, when reducing tire weight by employing the partial tie rubber layer in the present invention, the protruding amount L1 with respect to the perpendicular line P (that is, the position of the outermost end portion of the belt layer in the tire lateral direction) is set as described above. Thus, a minimum region necessary for achieving air permeation preventing performance and steering stability comparable to those in the related art can be covered by the partial tie rubber layer while reducing tire weight sufficiently, and it is possible to maintain excellent air permeation preventing performance and steering stability at a known level. As a result, air permeation preventing performance, steering stability, and reduction in tire weight can be achieved in a well-balanced manner. Note that, in the present invention, "periphery length" refers to a length measured along the extension direction of each tire component (partial tie rubber layer) in the tire meridian cross-section.

In the present invention, it is preferred that the protruding amount L1 of the partial tie rubber layer be equal to or larger than 15 mm. By setting the protruding amount L1 to the appropriate range and performing optimization in this manner, air permeation preventing performance, steering stability, and reduction in tire weight can be achieved in a further balanced manner.

In the present invention, the hardness of the rubber constituting the partial tie rubber layer is
from 55 to 65. With this, it is possible to compensate for the rigidity of the sidewall portions that may be degraded along with the suppression of the usage amount of the partial tie rubber layer, which is advantageous in maintaining steering stability. Note that the term "rubber hardness" in the present invention is construed under JIS K6253, and is measured by a type A durometer at a temperature of 20°C (so-called JIS-A hardness).

In the present invention, it is preferred that a thickness of the partial tie rubber layer be from 0.1 mm to 1.0 mm. By setting the thickness of the partial tie rubber layer to the appropriate range and performing optimization in this manner, air permeation preventing performance, steering stability, and reduction in tire weight can be achieved in a further balanced manner. Note that the term "thickness of the partial tie rubber layer" is the thickness of the main portion of the partial tie rubber layer (portion that extends while maintaining a constant thickness). When the partial tie rubber layer has a tapered shape in which the thickness decreases toward the end portion, for example, the thickness of the partial tie rubber layer is the thickness of the portion except for the end portion.

### Brief Description of Drawings

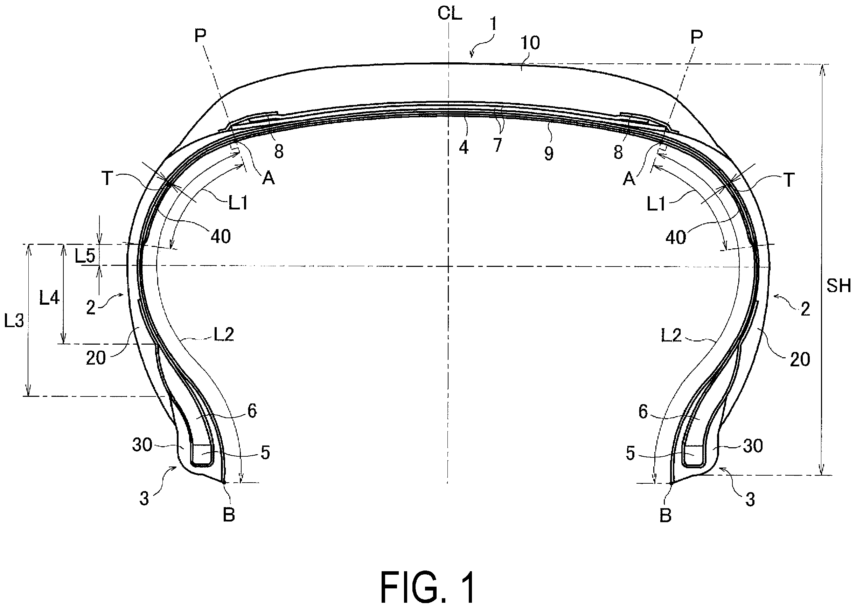

FIG. 1 is a meridian cross-sectional view of a pneumatic tire according to an embodiment of the present invention.

### Description of Embodiments

Configurations of embodiments of the present invention are described in detail below with reference to the accompanying drawings.

As illustrated in FIG. 1, the pneumatic tire of an embodiment of the present invention includes an annular tread portion 1 extending in the tire circumferential direction, a pair of sidewall portions 2 disposed on both sides of the tread portion 1, and a pair of bead portions 3 disposed inward of the sidewall portions 2 in the tire radial direction. Note that "CL" in FIG. 1 denotes the tire equator.

A carcass layer 4 is mounted between the left-right pair of bead portions 3. The carcass layer 4 includes a plurality of reinforcing cords extending in the tire radial direction, and is folded back around a bead core 5 disposed in each of the bead portions 3 from a vehicle inner side to a vehicle outer side. Additionally, bead fillers 6 are disposed on the periphery of the bead cores 5, and each bead filler 6 is enveloped by a main body portion and a folded back portion of the carcass layer 4. A plurality (in the illustrated example, two layers) of belt layers 7 are embedded on an outer circumferential side of the carcass layer 4 in the tread portion 1. The belt layers 7 each include a plurality of reinforcing cords that are inclined with respect to the tire circumferential direction, with the reinforcing cords of the different layers arranged in a criss-cross manner. In these belt layers 7, the inclination angle of the reinforcing cords with respect to the tire circumferential direction ranges from, for example, 10° to 40°. Moreover, belt reinforcing layers 8 (in the illustrated example, a pair of belt reinforcing layers 8 covering the end portions of the belt layers 7) are provided on the outer circumferential side of the belt layers 7. The belt reinforcing layer 8 includes organic fiber cords oriented in the tire circumferential direction. In the belt reinforcing layer 8, the angle of the organic fiber cords with respect to the tire circumferential direction is set, for example, to from 0° to 5°. An innerliner layer 9 is provided on the inner surface of the tire. The innerliner layer 9 is constituted by a rubber composition containing a butyl rubber having air permeation preventing performance, and prevents air filled in the tire from passing out of the tire.

A tread rubber layer 10 is disposed on the outer circumferential side of the carcass layer 4 in the tread portion 1. A side rubber layer 20 is disposed on the outer circumferential side (outward in the tire lateral direction) of the carcass layer 4 in each of the sidewall portions 2. A rim cushion rubber layer 30 is disposed on the outer circumferential side (outward in the tire lateral direction) of the carcass layer 4 in each of the bead portions 3. The tread rubber layer 10 may have a structure including two types of rubber layers (cap tread rubber layer, undertread rubber layer) with differing physical properties layered in the tire radial direction.

A partial tie rubber layer 40 is disposed between the innerliner layer 9 and the carcass layer 4. The tie rubber layer is a layer for preventing the carcass cords from biting into the innerliner layer 9 when an unvulcanized pneumatic tire is inflated at the time of manufacturing a tire, and contributes to air permeation preventing performance and steering stability on a dry road surface in the tire after manufacturing. In the related art, the tie rubber layer is provided so as to cover all the region between the carcass layer 4 and the innerliner layer 9 (full tie rubber layer). However, in the present invention, the tie rubber layer is selectively provided as the partial tie rubber layer 40 in a region described below except for the tips of the bead portions 3. That is, the partial tie rubber layer 40 of the present invention is disposed so that a protruding amount L1 of the partial tie rubber layer 40 toward the bead portion 3 with respect to a perpendicular line P, which is drawn from the outermost end portion of the belt layer 7 in the tire lateral direction toward the innerliner layer 9, is 0.25 times to 0.80 times as large as a periphery length L2 along the tire inner surface from an intersection point A of the perpendicular line P and the tire inner surface to a tip point B of a bead toe.

As compared to the related-art pneumatic tire having a full tie rubber layer, when reducing tire weight by employing the partial tie rubber layer 40, the protruding amount L1 with respect to the perpendicular line P (that is, the position of the outermost end portion of the belt layer in the tire lateral direction) is set as described above. Thus, a minimum region necessary for achieving air permeation preventing performance and steering stability comparable to those in the related art can be covered by the partial tie rubber layer 40, and it is possible to maintain excellent air permeation preventing performance and steering stability at a known level. Additionally, the usage amount of the partial tie rubber layer can be minimized without unnecessarily increasing the region covered by the partial tie rubber layer 40 to achieve such performance. Thus, the tire weight can be sufficiently reduced. As a result, air permeation preventing performance, steering stability, and reduction in tire weight can be achieved in a well-balanced manner.

At this time, when the protruding amount L1 is less than 0.25 times as large as the periphery length L2, the partial tie rubber layer 40 cannot cover a sufficient region, and air permeation preventing performance and steering stability cannot be maintained satisfactorily. When the protruding amount L1 is more than 0.80 times as large as the periphery length L2, the partial tie rubber layer has substantially the same weight as the full tie rubber layer, and the effect of reducing tire weight cannot be obtained sufficiently.

It is preferred that the protruding amount L1 of the partial tie rubber layer 40 be equal to or larger than 15 mm as well as satisfy the above-mentioned range. As a result of the intensive research on the arrangement of the partial tie rubber layer 40 when the partial tie rubber layer 40 is employed, in order to obtain air permeation preventing performance and steering stability comparable to those in the pneumatic tire including the related-art full tie rubber layer, the inventor of the present invention has found out that it is preferred that the partial tie rubber layer 40 cover at least a specific region in the vicinity of the outermost end portion of the belt layer 7 in the tire lateral direction (a region from the position of the perpendicular line P to the position away from the perpendicular line P toward the bead portion 3 by 15 mm along the partial tie rubber layer 40). When the protruding amount L1 is set to be equal to or larger than 15 mm as described above, the partial tie rubber layer 40 can cover the region securely, which is advantageous in maintaining air permeation preventing performance and steering stability at a high level. At this time, when the protruding amount L1 is smaller than 15 mm, the above-mentioned region cannot be covered, and it is difficult to maintain air permeation preventing performance and steering stability satisfactorily.

In order to achieve reduction in tire weight and maintenance of air permeation preventing performance and steering stability in a further balanced manner, the protruding amount L1 may be set to be 0.30 times to 0.70 times as large as the periphery length L2. With this, while the partial tie rubber layer 40 covers the sufficient region including the region, which is preferably covered by the partial tie rubber layer 40, the usage amount of the partial tie rubber layer 40 can be suppressed moderately. Thus, it is extremely advantageous to reduce tire weight while maintaining air permeation preventing performance and steering stability at a high level.

In the present invention, it is preferred that the partial tie rubber layer 40 have the end portion set at a position described below as well as be disposed at the above-mentioned position. Specifically, it is preferred that the end portion of the partial tie rubber layer 40 be positioned further outward in the tire radial direction than the outer end portion of the rim cushion rubber layer 30 in the tire radial direction and that a separation distance L3 between the end portion of the partial tie rubber layer 40 and the end portion of the rim cushion rubber layer 30 on the outer side in the tire radial direction be equal to or larger than 0.50 times as large as a tire cross-sectional height SH. Additionally, it is preferred that the end portion of the partial tie rubber layer 40 be positioned further outward in the tire radial direction than the outer end portion of the bead filler 6 in the tire radial direction and that a separation distance L4 between the end portion of the partial tie rubber layer 40 and the end portion of the bead filler 6 on the outer side in the tire radial direction be equal to or greater than 0.40 times as large as the tire cross-sectional height SH. With this, the positional relationship between the partial tie rubber layer 40 and the other tire components (rim cushion rubber layer 30, bead filler 6) is optimized, and the partial tie rubber layer 40 can be appropriately separated from the other tire components (rim cushion rubber layer 30, bead filler 6), which are rigid members. Thus, this is particularly advantageous in maintaining steering stability.

Furthermore, it is preferred that the end portion of the partial tie rubber layer 40 be positioned further outward in the tire radial direction than a tire maximum width position and that a separation distance L5 between the end portion of the partial tie rubber layer 40 and the tire maximum width position be equal to or larger than 0.05 times as large as the tire cross-sectional height SH. By preventing the partial tie rubber layer 40 from overlapping with the tire maximum width position as described above, the effect of reducing tire weight can be further improved.

As a rubber composition forming the partial tie rubber layer 40, a rubber composition used for the related-art tie rubber layer (related-art full tie rubber layer and partial tie rubber layer) can be used. A rubber composition having rubber hardness of from 55 to 65 is used. By using the rubber composition having moderate hardness as the partial tie rubber layer 40 in this manner, the rigidity of the sidewall portions 2 that may be degraded along with suppression of the usage amount of the partial tie rubber layer 40 can be compensated for, which is advantageous in maintaining steering stability. At this time, when the hardness of the partial tie rubber layer 40 is less than 50, the effect of compensating for the rigidity of the sidewall portions 2 as described above becomes limited, and it becomes difficult to maintain steering stability at a high level. When the hardness of the partial tie rubber layer 40 is greater than 70, the rigidity of the sidewall portions 2 are excessively high, and thus the intrinsic performance of the pneumatic tire may be adversely affected.

The partial tie rubber layer 40 is required to have a thickness sufficient to sufficiently exhibit the function of the tie rubber layer (such as preventing the carcass cords from being biting into the innerliner layer 9 at the time of manufacturing the tire). At the same time, it is preferred to suppress the usage amount in order to reduce tire weight. Therefore, in the present invention, a thickness T of the partial tie rubber layer 40 may be set to preferably from 0.1 mm to 1.0 mm, more preferably from 0.3 mm to 0.7 mm. With this, the function of the tie rubber layer can be sufficiently exhibited, and the effect of reducing tire weight can be sufficiently exhibited while air permeation preventing performance and steering stability are maintained favorably. At this time, when the thickness T of the partial tie rubber layer 40 is smaller than 0.1 mm, the partial tie rubber layer 40 is excessively thin. Thus, the partial tie rubber layer 40 does not function sufficiently as the tie rubber layer, and the effect of preventing the carcass cords from biting into the innerliner layer 9 at the time of manufacturing the tire is limited. As a result, it becomes difficult to maintain air permeation preventing performance and steering stability sufficiently. When the thickness T of the partial tie rubber layer 40 is larger than 1.0 mm, the partial tie rubber layer 40 is excessively thick, and the usage amount is increased. Thus, the effect of reducing tire weight is limited.

### Examples

25 types of pneumatic tires including Conventional Example 1, Comparative Examples 1 to 4, and Examples 1 to 20 were manufactured. Each of the tires had a tire size of 195/65R15 and a basic structure illustrated in FIG. 1, and was set to have the following conditions as shown in Table 1 or 2: a structure of a tie rubber layer; a protruding amount L1 of the partial tie rubber layer toward a bead portion with respect to a perpendicular line P, which is drawn from an outermost end portion of the belt layer in the tire lateral direction toward an innerliner layer; a periphery length L2 along a tire inner surface from an intersection point A of the perpendicular line P and a tire inner surface to a tip point B of a bead toe; a ratio of a separation distance L3 between the end portion of the partial tie rubber layer and an end portion of a rim cushion rubber layer on an outer side in the tire radial direction with respect to a tire cross-sectional height SH (L3/SH); a ratio of a separation distance L4 between the end portion of the partial tie rubber layer and an end portion of a bead filler on an outer side in the tire radial direction with respect to the tire cross-sectional height SH (L4/SH); a ratio of a separation distance L5 between the end portion of the partial tie rubber layer and a tire maximum width position with respect to the tire cross-sectional height SH (L5/SH); harness of a rubber composition forming the partial tie rubber layer; and a rubber thickness T of the partial tie rubber layer.

Note that, for the "structure of the tie rubber layer" in Tables 1 to 2, when the tie rubber layer was a full tie rubber layer, "full" was given. When the tie rubber layer was a partial tie rubber layer, "partial" was given.

Those 25 types of pneumatic tires were evaluated for the usage amount of the tie rubber, air permeation preventing performance, and steering stability on a dry road surface (steering stability) by the evaluation methods described below, and the results are also shown in Tables 1 and 2.

### Usage Amount of Tie Rubber

The usage amount of the tie rubber in each test tire was measured. The evaluation results are expressed as index values with Conventional Example 1 being assigned the index value of 100. Smaller index values indicate lower tire weight, which indicates tire weight can be reduced. Note that when the index value is less than "95", the usage amount of the tie rubber is less enough, which indicates that sufficient tire weight reduction effect has been obtained. In particular, when the index value is less than or equal to "85", the effect of reducing tire weight is excellent. When the index value is less than or equal to "65", the effect of reducing tire weight is outstandingly excellent. Conversely, when the index value is greater than or equal to "95", the usage amount of the tie rubber cannot be sufficiently reduced, and has substantially the same degree of tire weight as that of the related-art full tie rubber layer, which indicates that the effect of reducing tire weight has not been obtained sufficiently.

### Air Permeation Preventing Performance

Each of the test tires was assembled on a wheel having a rim size of 15x6J, inflated to an air pressure of 230 kPa, and left in a room having a normal temperature for 720 hours. An air permeation rate was calculated after performing temperature correction for a room temperature based on the air pressure at the start of being left and the air pressure after 720 hours (at the end of being left). The evaluation results are expressed as index values with Conventional Example 1 being assigned an inverse of the calculation value of 100. Larger index values indicate smaller air permeation rates, and, thus, excellent air permeation preventing performance. Note that the index value of "90" or greater indicates that the known level was maintained and that sufficient air permeation preventing performance was obtained. In particular, when the index value is "94" or greater, air permeation preventing performance is sufficiently high, which indicates that air permeation preventing performance can be effectively maintained.

### Steering Stability Performance

Each of the test tires was assembled on a wheel having a rim size of 15x6J, inflated to an air pressure of 210 kPa, and mounted on a test vehicle having displacement of 1.5 L. The tires were subjected to a sensory evaluation by a test driver on a test course with a dry road surface. The evaluation results are expressed as index values, with the results of Conventional Example 1 being assigned an index value of 100. Larger index values indicate superior steering stability. Note that the index value of "90" or greater indicates that the known level was maintained and that sufficient steering stability was obtained. In particular, when the index value is "94" or greater, steering stability is sufficiently high, which indicates that steering stability can be effectively maintained.

**[Table 1]**

| | Con- ven- tional Example | Com- para- tive Example | Com- para- tive Example | Example | Example | Example | Example | Example | Com- para- tive Example | Com- para- tive Example | Example | Example | Example |
|---|---|---|---|---|---|---|---|---|---|---|---|---|---|
| | 1 | 1 | 2 | 1 | 2 | 3 | 4 | 5 | 3 | 4 | 6 | 7 | 8 |
| Structure of tie rubber layer material | Full | Partial | Partial | Partial | Partial | Partial | Partial | Partial | Partial | Partial | Partial | Partial | Partial |
| Periphery length L2 | 130 | 130 | 130 | 130 | 130 | 130 | 130 | 130 | 130 | 130 | 130 | 130 | 130 |
| Protruding amount L1 mm | - | 13 | 26 | 33 | 39 | 59 | 91 | 104 | 111 | 124 | 39 | 39 | 39 |
| L1/L2 | - | 0.10 | 0.20 | 0.25 | 0.30 | 0.45 | 0.70 | 0.80 | 0.85 | 0.95 | 0.30 | 0.30 | 0.30 |
| L3/SH | - | 0.66 | 0.55 | 0.50 | 0.45 | 0.29 | 0.03 | 0.07 | 0.13 | 0.23 | 0.45 | 0.45 | 0.45 |
| L4/SH | - | 0.58 | 0.47 | 0.42 | 0.37 | 0.21 | 0.05 | 0.15 | 0.21 | 0.31 | 0.37 | 0.37 | 0.37 |
| L5/SH | - | 0.34 | 0.23 | 0.18 | 0.13 | 0.03 | 0.29 | 0.39 | 0.45 | 0.55 | 0.13 | 0.13 | 0.13 |
| Hardness | 60 | 60 | 60 | 60 | 60 | 60 | 60 | 60 | 60 | 60 | 45 | 50 | 55 |
| Rubber thickness mm | 0.6 | 0.6 | 0.6 | 0.6 | 0.6 | 0.6 | 0.6 | 0.6 | 0.6 | 0.6 | 0.6 | 0.6 | 0.6 |
| Usage amount of tie rubber Index value | 100 | 42 | 48 | 52 | 55 | 65 | 81 | 87 | 91 | 97 | 55 | 55 | 55 |
| Air Permeation Preventing Performance Index value | 100 | 80 | 85 | 95 | 96 | 97 | 98 | 99 | 100 | 100 | 96 | 96 | 96 |
| Steering stability Index value | 100 | 80 | 85 | 95 | 96 | 97 | 98 | 99 | 100 | 100 | 92 | 93 | 94 |

**[Table 2]**

| | Example 9 | Example 10 | Example 11 | Example 12 | Example 13 | Example 14 | Example 15 | Example 16 | Example 17 | Example 18 | Example 19 | Example 20 |
|---|---|---|---|---|---|---|---|---|---|---|---|---|
| Structure of tie rubber layer material | Partial | Partial | Partial | Partial | Partial | Partial | Partial | Partial | Partial | Partial | Partial | Partial |
| Periphery length L2 | 130 | 130 | 130 | 130 | 130 | 130 | 130 | 130 | 130 | 130 | 130 | 130 |
| Protruding amount L1 mm | 39 | 39 | 39 | 39 | 39 | 39 | 39 | 39 | 39 | 95 | 85 | 55 |
| L1/L2 | 0.30 | 0.30 | 0.30 | 0.30 | 0.30 | 0.30 | 0.30 | 0.30 | 0.30 | 0.73 | 0.65 | 0.42 |
| L3/SH | 0.45 | 0.45 | 0.45 | 0.45 | 0.45 | 0.45 | 0.45 | 0.45 | 0.45 | 0 | 0.08 | 0.32 |
| L4/SH | 0.37 | 0.37 | 0.37 | 0.37 | 0.37 | 0.37 | 0.37 | 0.37 | 0.37 | 0.08 | 0 | 0.24 |
| L5/SH | 0.13 | 0.13 | 0.13 | 0.13 | 0.13 | 0.13 | 0.13 | 0.13 | 0.13 | 0.32 | 0.24 | 0 |
| Hardness | 65 | 70 | 75 | 60 | 60 | 60 | 60 | 60 | 60 | 60 | 60 | 60 |
| Rubber thickness mm | 0.6 | 0.6 | 0.6 | 0.1 | 0.3 | 0.7 | 0.9 | 1.0 | 1.1 | 0.5 | 0.5 | 0.6 |
| Usage amount of tie rubber Index value | 55 | 55 | 55 | 9 | 27 | 64 | 82 | 91 | 100 | 69 | 65 | 63 |
| Air Permeation Preventing Performance Index value | 96 | 96 | 96 | 92 | 94 | 96 | 97 | 98 | 99 | 98 | 98 | 97 |
| Steering stability Index value | 94 | 93 | 92 | 90 | 94 | 96 | 98 | 98 | 99 | 98 | 98 | 97 |

As can be seen from Tables 1 and 2, in each of Examples 1 to 20, tire weight was reduced while maintaining air permeation preventing performance and steering stability performance as compared to Conventional Example 1. In particular, in Examples 2 to 4 in which the protruding amount L1 satisfied a more preferable range, Examples 8 to 9 in which the hardness of the partial tie rubber layer satisfied a more preferable range, and Examples 13 to 14 in which the rubber thickness of the partial tie rubber layer satisfied a more preferable range, the usage amount of the tie rubber was sufficiently suppressed, and tire weight was sufficiently reduced. In addition, in contrast to a reduction rate of tire weight, air permeation preventing performance and steering stability were also maintained satisfactorily in a balanced manner.

On the other hand, in Comparative Examples 1 to 2, because the protruding amount L1 was too small, it was difficult for the partial tie rubber layer to perform proper covering, and air permeation preventing performance and steering stability could not be maintained satisfactorily. In Comparative Examples 3 to 4, because the protruding amount L1 was too large, the usage amount of the partial tie rubber layer was excessive, and tire weight could not be reduced sufficiently.

### Reference Signs List

1 Tread portion
2 Sidewall portion
3 Bead portion
4 Carcass layer
5 Bead core
6 Bead filler
7 Belt layer
8 Belt reinforcing layer
9 Innerliner layer
10 Tread rubber layer
20 Side rubber layer
30 Rim cushion rubber layer
40 Partial tie rubber layer
CL Tire equator

## Claims

1. A pneumatic tire, comprising:
a tread portion (1) having an annular shape extending in a tire circumferential direction;
a pair of side wall portions (2) disposed on both sides of the tread portion (1);
a pair of bead portions (3) disposed inward of the pair of side wall portions (2) in a tire radial direction;
a carcass layer (4) mounted between the pair of bead portions (3);
a belt layer (7) disposed on an outer circumferential side of the carcass layer (4) in the tread portion;
an innerliner layer (9) disposed on a tire inner surface along the carcass layer (4);
**characterized in that** the pneumatic tire further comprises
a partial tie rubber layer (40) extending continuously across the equator (CL) of the tire between the bead portion (3) on one side in the tire width direction and the bead portion (3) on the other side in the tire width direction and disposed between the carcass layer (4) and the innerliner layer (9) in all regions except for tips of the pair of bead portions (3) in the meridian cross-section,
a protruding amount L1 of the partial tie rubber layer (40) toward the pair of bead portions (3) with respect to a perpendicular line P, which is drawn from an outermost end portion of the belt layer (7) in a tire lateral direction toward the innerliner layer (9), being 0.25 times to 0.80 times as large as a periphery length L2 along the tire inner surface from an intersection point A of the perpendicular line P and the tire inner surface to a tip point B of a bead toe, wherein
the partial tie rubber layer (40) is formed of rubber having hardness under JIS K6253, measured by a type A durometer at a temperature of 20°C, of from 55 to 65.

2. The pneumatic tire according to claim 1, wherein
the protruding amount L1 is equal to or larger than 15 mm.

3. The pneumatic tire according to claim 1 or 2, wherein
the partial tie rubber layer (40) has a thickness (T) of from 0.1 mm to 1.0 mm.

## Patentansprüche

1. Luftreifen, umfassend:
einen Laufflächenabschnitt (1) mit einer Ringform, der sich in Reifenumfangsrichtung erstreckt;
ein Paar Seitenwandabschnitte (2), die auf beiden Seiten des Laufflächenabschnitts (1) angeordnet sind;
ein Paar Wulstabschnitte (3), die von dem Paar Seitenwandabschnitte (2) in Reifenradialrichtung nach innen angeordnet sind;
eine Karkassenschicht (4), die zwischen dem Paar Wulstabschnitte (3) angeordnet ist; eine Gürtelschicht (7), die auf einer Außenumfangsseite der Karkassenschicht (4) im Laufflächenabschnitt angeordnet ist;
eine Innenseelenschicht (9), die auf einer Reifeninnenoberfläche entlang der Karkassenschicht (4) angeordnet ist;
**dadurch gekennzeichnet, dass** der Luftreifen ferner Folgendes umfasst:
eine partielle Bindekautschukschicht (40), die sich kontinuierlich über den Äquator (CL) des Reifens zwischen dem Wulstabschnitt (3) auf einer Seite in Reifenbreitenrichtung und dem Wulstabschnitt (3) auf der anderen Seite in Reifenbreitenrichtung erstreckt und zwischen der Karkassenschicht (4) und der Innenseelenschicht (9) in allen Bereichen mit Ausnahme von Spitzen des Paars Wulstabschnitte (3) im Meridianquerschnitt angeordnet ist,
einen Vorstehbetrag L1 der partiellen Bindekautschukschicht (40) in Richtung des Paars Wulstabschnitte (3) in Bezug auf eine senkrechte Linie P, die von einem äußersten Endabschnitt der Gürtelschicht (7) in Reifenquerrichtung in Richtung der Innenseelenschicht (9) gezogen wird, 0,25 mal bis 0,80 mal so groß ist wie eine Umfangslänge L2 entlang der Reifeninnenoberfläche von einem Schnittpunkt A der senkrechten Linie P und der Reifeninnenoberfläche zu einem Spitzenpunkt B einer Wulstzehe, wobei
die partielle Bindekautschukschicht (40) aus Kautschuk mit einer Härte gemäß JIS K6253, gemessen mit einem Durometer vom Typ A bei einer Temperatur von 20 °C, von 55 bis 65 gebildet ist.

2. Luftreifen gemäß Anspruch 1, wobei
der Vorstehbetrag L1 ist gleich oder größer als 15 mm.

3. Luftreifen gemäß Anspruch 1 oder 2, wobei
die partielle Bindekautschukschicht (40) eine Dicke (T) von 0,1 mm bis 1,0 mm aufweist.

## Revendications

1. Pneumatique, comprenant :
une partie de bande de roulement (1) ayant une forme annulaire s'étendant dans une direction circonférentielle de pneu ;
une paire de parties de paroi de côté (2) disposées des deux côtés de la partie de bande de roulement (1) ;
une paire de parties de talon (3) disposées vers l'intérieur de la paire de parties de paroi de côté (2) dans une direction radiale de pneu ;
une couche de carcasse (4) montée entre la paire de parties de talon (3) ; une couche de ceinture (7) disposée sur un côté circonférentiel externe de la couche de carcasse (4) dans la partie de bande de roulement ;
une couche de revêtement interne (9) disposée sur une surface interne de pneu le long de la couche de carcasse (4) ;
**caractérisé en ce que** le pneumatique comprend en outre
une couche de caoutchouc de liaison partielle (40) s'étendant en continu à travers l'équateur (CL) du pneu entre la partie de talon (3) d'un côté dans la direction de largeur de pneu et la partie de talon (3) de l'autre côté dans la direction de largeur de pneu et disposée entre la couche de carcasse (4) et la couche de revêtement interne (9) dans toutes les régions à l'exception des bouts de la paire de parties de talon (3) dans la section transversale méridienne,
une quantité saillante L1 de la couche de caoutchouc de liaison partielle (40) vers la paire de parties de talon (3) par rapport à une ligne perpendiculaire P, qui est tracée depuis une partie d'extrémité la plus externe de la couche de ceinture (7) dans une direction latérale de pneu vers la couche de revêtement interne (9), étant 0,25 fois à 0,80 fois plus grande qu'une longueur périphérique L2 le long de la surface interne de pneu d'un point d'intersection A de la ligne perpendiculaire P et de la surface interne de pneu à un point de bout B d'une pointe de talon, dans lequel
la couche de caoutchouc de liaison partielle (40) est formée de caoutchouc ayant une dureté sous JIS K6253, mesurée par un duromètre de type A à une température de 20 °C, de 55 à 65.

2. Pneumatique selon la revendication 1, dans lequel
la quantité en saillie L1 est égale ou plus grande que 15 mm.

3. Pneumatique selon la revendication 1 ou 2, dans lequel
la couche de caoutchouc de liaison partielle (40) a une épaisseur (T) de 0,1 mm à 1,0 mm.
